# EUROPEAN PATENT APPLICATION

(11) **EP 1 120 509 A1**
(43) Date of publication of application: **01.08.2001**
(21) Application number: 00830048.5
(22) Date of filing: 26.01.2000
(51) Int. Cl.: E04C 2/36, F16B 5/01, B32B 3/12

(54) **Method for manufacturing structural elements substantially made of cellulose-based material, stiffened, and related structural element**

(71) Applicant: Tonelli S.A., 47891 Falciano (SM)
(72) Inventor: Tonelli, Piero, 47891 Falciano (SM)
(74) Representative: Lanzoni, Luciano

(57) **Abstract**

A method for manufacturing structural elements (1) substantially made of cellulose-based material comprises the steps of rigidly connecting at least a first planar layer (2a) of cellulose-based material and a superposed alveolar layer (3), also made of cellulose-based material, of rigidly connecting in superposition to the alveolar layer (3) at least a second planar layer (2b) of cellulose-based material, to form a monolithic semi-finished assembly (2a, 3, 2b); and of filling at least a circumscribed portion (4) of the alveolar layer (3) with a filling material suitable for structurally co-operating with the cellulose-based material. The filling material provides the semi-finished product (2a, 3, 2b) with the ability to withstand circumscribed stresses applied around the portion (4) of the alveolar layer (3) involved with the filling. Said filling phase comprises the injection of the filling material through holes (5) obtained on at least one of said first and second planar layers (2a, 2b) of cellulose-based material.

## Description

The present invention relates to the manufacturing of multi-layer panels, internally lightened, to obtain manufactured items substantially made of cellulose-based material, for general employment. More in particular, such panels are advantageously employed to manufacture items represented, by way of non limiting example, by brackets or boards for supporting objects, by modular furniture for the most varied uses, by wings for furniture items, by doors, crates, etc.

In the manufacture of modular furniture items, the use is widely known of semi-finished products constituted by internally lightened multi-layer panels.

Such panels are obtained from two or more planar layers constituted for instance by sheets of wooden material, more or less valuable, and by an interposed alveolar layer rigidly connected thereto. The internal alveolar structure is usually obtained by crossing (possibly, mortising) thin plates of wooden material, usually of low value.

The panels described above present some drawbacks.

Both the overall rigidity of the panel and the ability of the panel to resist superficial contact forces located on rather limited areas of application, are obtained as a result of the structural collaboration occurring solely between the outer layers of the panel and the alveolar layer intermediate thereto. Their inability to resist highly circumscribed concentrated loads prevents the use of mechanical connection devices of the panels, such as connecting screws and bolts, as well as the employment of hardware and accessory devices for using the manufactured item, such as handles, hinges, or other similar devices.

The use is also known of a load-bearing frame made of solid wood, mainly in the form of reinforcing perimeter frame, within which the alveolar structure is inserted. Two sheets of wooden material are then rigidly connected to both main faces of the manufactured item thus obtained. The frame allows the insertion of hinges and fastening devices. In particular, in the construction of doors, the use is also known of blocks of solid wood rigidly connected to the perimeter frame in correspondence with the position of handles and locks. In this case, the internal alveolar structure is so shaped as to adapt itself to the shape of the reinforcing frame and it can also be made of cardboard and honeycomb-shaped, whilst all other components are made of wooden material.

These manufactured items, too, are not free from drawbacks.

They require the use of valuable material, such as solid wood, in considerable quantities, since the need to reinforce the structure in its perimeter and to have sufficient local resistance for the insertion of the metal accessories requires the dimensions of the additional blocks and the thickness of the frame to be significant. A further working step is necessary (in addition to the manufacture of the frame), in particular the shaping of the internal alveolar structure. Moreover, it is necessary to know beforehand the positioning of hinges, fastening systems, locks, handles, etc., in order to determine the exact points of the perimeter frame in correspondence with which the reinforcing blocks are to be located.

In the construction of doors, the use is also known of lightened panels of the aforesaid type wherein the alveolar structure is filled with phenolic foams, in order to give the door as a whole a satisfactory thermal and sound insulation. To this end it is particularly important for the phenolic foam to be present in all alveoli of the honeycomb structure. The alveolar structure thus filled is generally obtained according to a method which exploits the lightness and the poor mechanical resistance of phenolic foams.

In particular, a honeycomb alveolar structure of high thickness, generally multiple of the thickness corresponding to the door, is filled in all alveoli with such a quantity of phenolic resin that, after an expansion process, the phenolic foam produced fills the whole alveolar structure itself. The semi-finished product thus obtained, after being trimmed at the ends as need be, is cut transversely to the thickness of the door.

Known are also cases wherein the filling is performed with incoherent, incombustible materials, for instance sand, able to render the manufactured item fire-retardant and sound-proofing. For purposes of thermal / sound insulation, the cavities of the honeycomb need to be filled over the entire extension of the panel.

The known solutions described above have in common the fact that the material filling the alveolar structure does not structurally collaborate with the remaining parts constituting the panel. In other words, in the case of the panels, both the strength, and the overall rigidity of the panel, as well as the ability of the panel to resist superficial contact forces circumscribed on rather limited areas of application, are obtained as a result of the structural collaboration occurring solely between the outer layers of the panel and the alveolar layer intermediate thereto.

The aim of the present invention is to provide a simple method for manufacturing layered panels made of cellulose-based material suitable for structural use without local resistance limitations, i.e. able to combine a high load-bearing capacity deriving from its own strength and overall rigidity to an equally high ability to withstand concentrated superficial loads.

In accordance with the invention such a result is obtained by means of a method for manufacturing structural elements made of cellulose-based material comprising the steps of rigidly connecting at least a first planar layer of cellulose-based material and a superposed alveolar layer, also made of cellulose-based material and rigidly to connect in superposition to the alveolar layer at least a second planar layer of cellulose-based material, to form a monolithic semi-finished assembly; the method is characterised in that it comprises a step whereby at least a circumscribed portion of the alveolar layer is filled with a filler material suitable to co-operate structurally with the cellulose-based material, said material providing the semi-finished product with the ability to withstand circumscribed stresses applied around the portion of the alveolar layer involved with the filling.

The method according to the invention has numerous advantages, among them that of allowing the complete prefabrication of semi-finished products made of cellulose-based material, which can then be cut to measure and according to the specific dimensional requirements of the manufactured item whereto they are destined and stiffened only where necessary to be able to accept connecting elements, hardware, handles, and/or accessories to be used in the manufactured item whereto they are destined.

The product of such a method is a structural element - also constituting the subject of the invention - which starting from a basic semi-finished product with standardised and general dimensional and strength characteristics is specialised on each occasion for a specific and particular employment.

The method and the related product thus allow to manufacture, with great cost savings, manufactured items made of cellulose-based material, in particular, advantageously, made of cardboard, which can replace corresponding products manufactured today with far more expensive materials: it is possible to manufacture modular furniture items, supporting brackets for objects, table tops, wings for furniture items, interior doors for environments in the home and elsewhere, etc., completely avoiding, for instance, the use both of the perimeter frame and of the reinforcing blocks made of solid wood.

The low cost of the structural elements also stimulates the frequent replacement of the manufactured item obtained therewith favouring, for instance, the frequent renewal of certain domestic or business furnishings.

In case of removal of the manufactured items, the nearly total recovery and recycling of their constituent materials also allow the advantage of conferring minimal quantities of waste to tips, all to the benefit of environmental protection.

Further features of the invention, according to the aforesaid aims, can clearly be noted from the content of the claims set out hereafter and its advantages shall become more readily apparent in the detailed description that follows, made with reference to the accompanying drawings, which represent an embodiment provided purely by way of non limiting example, in which:

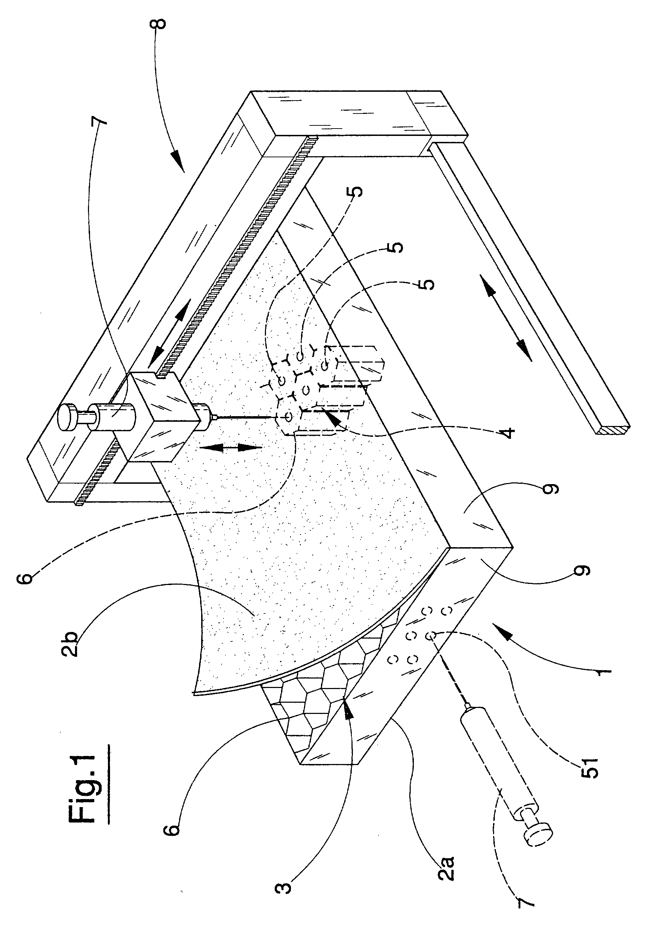

- Figure 1 is a schematic overall view of an apparatus for the implementation of the method according to the invention.

With reference to the accompanying drawing, the reference number 1 indicates in its entirety a constructive element made with cellulose-based material to produce manufactured items, in particular, but not in a limiting fashion, exemplified by panels for the construction of doors, furniture items and/or their component parts.

The structure element 1 essentially comprises a monolithic semi-finished product 2a, 3, 2b which is internally, locally stiffened by a filling material with characteristics suitable for co-operating structurally with the cellulose-based material.

More in particular, the semi-finished product 2a, 3, 2b is prefabricated according to a construction method which comprises the steps of rigidly connecting at least a first planar layer 2a of cellulose-based material, of suitable thickness, with a superposed alveolar layer 3, also made of cellulose-based material, which comprises a plurality of honeycomb-shaped cavities 6, and of rigidly connecting in superposition to the alveolar layer 3 at least a second planar layer 2b of cellulose-based material. The alveolar layer 3 and the two planar layers 2a, 2b of cellulose-based material are mutually glued and made mutually integral with a construction method whose details are omitted, as it is wholly known.

The cellulose-based material can be any suitable material, such as sheets of low-value wooden material or pressed paper or cardboard. In particular, preferably, cardboard is used for the embodiment of the present invention.

The method provides for the insertion of the filling material by means of a filling phase which is carried out on circumscribed and suitably selected portions 4 of the alveolar layer 3.

The criteria for the selection of the portions 4 of the alveolar structure 3 to be filled are closely correlated with the characteristics of the final manufactured item whereto the structural element 1 is destined. In general, these portions 4 are represented by all those portions which in the use of the final manufactured item are stressed locally with concentrated actions, or which otherwise require a local continuity of the material constituting the manufactured item itself. In the case of manufacture of components of furniture items, the portions 4 involved with the injection of filling material can for instance be the parts whereon the screws or similar interconnecting devices are to be applied; the parts situated around the points wherein the holes for possibly receiving handles, gripping elements or locks are to be obtained; the parts destined to house or to receive hardware and/or accessories for the use of the manufactured item.

The filling phase can be carried out immediately after the phase whereby the first planar layer 2a made of cellulose-based material is rigidly connected to the superposed alveolar layer 3. In this case, it is performed by casting or pouring the filling material only into the cavities 6 pertaining to the circumscribed portions 4.

Advantageously and alternatively, the filling phase is subsequent to the phase of rigidly connecting in superposition to the alveolar layer 3 the second planar layer 2b of cellulose-based material. In this case the filling phase comprises the injection of the filling material through holes 5 obtained on at least one of said first and second planar layer 2a, 2b made of cellulose-based material.

This allows completely to manufacture the semi-finished product 2a, 2, 3b without having to know beforehand where it shall have to be stiffened and to reinforce it only subsequently, after deciding its specific employment, with obvious advantages in terms of productive and manufacturing flexibility.

In the case wherein the circumscribed portions 4 are in proximity to lateral edges 9 of the semi-finished product and do not extend excessively towards the interior (as, for instance, in the case wherein they are to be used for fastening pintles or hinges on the edge 9 of the panel), the injection can be performed through similar holes 51 obtained along at least a part of the edge 9 of the panel itself.

The injection phase is carried out by related injector means 7 which, in practice, can have a wide range of different constructive structures. Merely by way of indication, said injector means are schematically exemplified by an actuator organ 7, which can be operated manually. Alternatively, the actuator organ 7 is supported by a machine structure 8 and is movable in the three directions of space, relative to the semi-finished product 2a, 3, 2b with procedures that can be controlled also automatically by a suitable program and by related automation means.

In practice, the actuator organ 7 allows to obtain the holes 5 on the first or on the second planar layer 2a, 2b made of cellulose-based material and then to fill some of the underlying cavities 6 of the alveolar layer 3 with a semi-fluid filling material which, after drying, becomes suitable to collaborate structurally with the cellulose-based material and to provide the semi-finished product 2a, 3, 2b with the ability to withstand circumscribed stresses.

In order to collaborate structurally with the peripheral walls of the cavities 6 of the alveolar layer 3, it is necessary for the filling material to be able to adhere to the cellulose-based material or, even better, to penetrate its surface, through the related natural micro-porosities and constitute with the cellulose-based material itself, micro-structural links.

Materials suitable for this purpose can be selected preferably, but not exclusively, in the family of polyurethane resins, in the family of epoxide resins, in the family of acrylic resins and in the family of plastic fillers. These materials which, during the injection phase, in the alveolar layer 3, are injected in the semi-fluid state, subsequently solidify, stiffen and become workable through chip removal, with characteristics and technological behaviour that are wholly similar to those typical of wood.

Advantageously, before the injection phase, a phase can be provided whereby the semi-finished product 2a, 3, 2b is bordered with an appropriate coating made of cellulose-based material of the border 9.

Advantageously, moreover, an additional phase can be provided whereby the semi-finished product is coated at least partially with a paper which can be coarse, or printed, or decorative, with the purpose of covering at least any holes 5 or 51 which may remain visible after the installation of the accessories in the circumscribed portions 4 and to provide the manufactured item with a pleasing appearance.

The invention thus conceived can be subject to numerous modifications and variations, without thereby departing from the scope of the inventive concept. Moreover, all components can be replaced by technically equivalent elements.

In practice all materials employed, as well as the dimensions, can be any and all, as need be.

## Claims

1. A method for manufacturing structural elements (1) substantially made of cellulose-based material comprising the phases of rigidly connecting at least a first planar layer (2a) of cellulose-based material and a superposed alveolar layer (3), also made of cellulose-based material and of rigidly connecting in superposition to the alveolar layer (3) at least a second planar layer (2b) made of cellulose-based material, to form a monolithic semi-finished product (2a, 3, 2b); the method is characterised in that it comprises a phase of filling at least a circumscribed portion (4) of the alveolar layer (3) with a filling material suitable for co-operating structurally with the cellulose-based material, said filling material providing the semi-finished product (2a, 3, 2b) with the ability to withstand circumscribed stresses applied in correspondence with the portion (4) of the alveolar layer (3) involved with the filling.

2. A method as claimed in claim 1, characterised in that the filling phase takes place at least subsequently to the phase of rigidly connecting the first planar layer (2a) of cellulose-based material to the superposed alveolar layer (3).

3. A method as claimed in claim 2, characterised in that the filling phase is subsequent to the phase of rigidly connecting in superposition to the alveolar layer (3) the second planar layer (2b) of cellulose-based material and in that said filling phase comprises the injection of the filling material through holes (5) obtained on at least one of said first and second planar layer (2a, 2b) of cellulose-based material.

4. A method as claimed in any of the claims from 1 to 3, characterised in that, during the filling phase, into the alveolar layer (3) is injected a filling material suitable for adhering to the cellulose-based material.

5. A method as claimed in any of the claims from 1 to 3, characterised in that, during the filling phase, into the alveolar layer (3) is injected a filling material suitable to penetrate the surface of the cellulose-based material and to constitute micro-structural links therewith.

6. A method as claimed in any of the claims from 1 to 5, characterised in that, during the filling phase, in the alveolar layer (3) is injected a structural cooperation material selected in the family of polyurethane resins.

7. A method as claimed in any of the claims from 1 to 5, characterised in that, during the filling phase, in the alveolar layer (3) is injected a structural cooperation material selected in the family of epoxide resins.

8. A method as claimed in any of the claims from 1 to 5, characterised in that, during the filling phase, in the alveolar layer (3) is injected a structural cooperation material selected in the family of acrylic resins.

9. A method as claimed in any of the claims from 1 to 5, characterised in that, during the filling phase, in the alveolar layer (3) is injected a structural cooperation material selected in the family of plastic fillers.

10. A method as claimed in any of the previous claims, characterised in that, during the filling phase, in the alveolar layer (3) is injected a structural cooperation material in the semi-fluid state, the method comprising a solidification phase wherein the filling material solidifies, stiffens and becomes workable by chip removal.

11. A method, as claimed in any of the previous claims, characterised in that it further comprises the phase of bordering the semi-finished product (2a, 3, 2b) with cellulose-based material.

12. A method, as claimed in any of the previous claims, characterised in that the cellulose-based material is cardboard.

13. A method as claimed in any of the previous claims, characterised in that it further comprises the phase of coating at least partially the semi-finished product (2a, 3, 2b) with an adhering layer of paper.

14. A structural element substantially made of cellulose-based material for producing manufactured items, in particular panels for the construction of doors, furniture items and/or their component parts, comprising a monolithic semi-finished product (2a, 3, 2b) wherein at least two planar layers (2a, 2b) made of cellulose-based material and an interposed alveolar layer (3), also made of cellulose-based material, are rigidly connected to each other; and a filling material contained in the cavities (6) of the alveolar layer (3), characterised in that the filling material is suitable for co-operating structurally with the cellulose-based material and is situated at least in parts of the alveolar layer (3) which are proximate to parts of the manufactured item that are locally to receive hardware and/or accessories for the use of the manufactured item.

15. A structural element as claimed in claim 14, characterised in that the filling material has been introduced into the alveolar layer (3) through corresponding holes (5) obtained at least in one of the planar layers (2a, 2b) of cellular-based materials.

16. A structural element as claimed in claim 14 or 15, characterised in that the alveolar layer (3) comprises a plurality of honeycomb-shaped cavities (6).

17. A structural element as claimed in any of the claims from 14 to 16, characterised in that the filling material injected into the alveolar layer (3) is suitable for adhering to the cellulose-based material.

18. A structural element as claimed in any of the claims from 14 to 16, characterised in that the filling material injected into the alveolar layer (3) is suitable for penetrating into the cellulose-based material and for constituting micro-structural links therewith.

19. A structural element as claimed in any of the claims from 14 to 18, characterised in that the filling material injected into the alveolar layer (3) is selected from the family of polyurethane resins.

20. A structural element as claimed in claim 14 to 18, characterised in that the filling material injected into the alveolar layer (3) is selected from the family of epoxide resins.

21. A structural element as claimed in any of the claims from 14 to 18, characterised in that the filling material injected into the alveolar layer (3) is selected from the family of acrylic resins.

22. A structural element as claimed in any of the claims from 14 to 18, characterised in that the filling material injected into the alveolar layer (3) is selected from the family of plastic fillers.

23. A structural element as claimed in any of the claims from 14 to 22, characterised in that the filling material is suitable for being worked by chip removal.

24. A structural element as claimed in any of the claims from 14 to 23, characterised in that it comprises a coating made of cellulose-based material on at least an edge (9).

25. A structural element as claimed in any of the claims from 14 to 24, characterised in that the cellulose-based material is cardboard.

26. A structural element as claimed in any of the claims from 14 to 25, characterised in that it is coated at least partially with an adhering layer of paper.
